Europäisches Patentamt

European Patent Office

Office européen des brevets

(11) Publication number: **0 385 012**
**A1**

## (12) EUROPEAN PATENT APPLICATION

(21) Application number: **89302173.3**

(22) Date of filing: **03.03.89**

(51) Int. Cl.⁵: **A01M 29/00**

(43) Date of publication of application:
**05.09.90 Bulletin 90/36**

(84) Designated Contracting States:
**DE FR GB IT**

(71) Applicant: **Chatten, Victor Herbert**
**1567 West 215th Street**
**Torrance California 90501(US)**

(72) Inventor: **Chatten, Victor Herbert**
**1567 West 215th Street**
**Torrance California 90501(US)**

(74) Representative: **Williams, Trevor John et al**
**J.A. KEMP & CO. 14 South Square Gray's Inn**
**London WC1R 5EU(GB)**

(54) **Method and apparatus for deterring birds.**

(57) Undesirable bird perchings are eliminated by attaching to the perching location a small gauge wire (10) in a spiral shape, the wire (10) being of sufficiently light gauge so as not to stably support the birds utilizing the perch, but of sufficiently heavy gauge, and the individual spirals being of proper size and spacing so as to interfere with the bird's ability to a light comfortably on the perching location.

FIG. 1.

EP 0 385 012 A1

## BACKGROUND

### Field of the Invention

This invention relates to mechanical apparatus, and a method for constructing same, for deterring birds from landing at undesirable locations.

### Prior Art

Because of the noises they can make, and the mess they can leave behind, birds are not always welcomed. Private as well as public areas can be rendered unsightly and unusable because birds have chosen a nearby overhead position as a favorite perch. The nuisance created by the birds can also be unhealthy as diseases carried in fungi in bird droppings can be communicated to humans. These problems and others can affect the small private residence as well as the large corporate skyscrapers, and every type, size and shape structure inbetween.

In some areas, the pigeon is the primary offending bird. Along the coastlines, seagulls are most troublesome. In other areas, starlings, sparrows, swallows and blackbirds are most often the problem, although there are countless species that can be the culprit.

For these reasons, numerous methods and devices have been utilized and devised to keep birds away. Mock predators, such as owls, hawks or snakes have been erected. Some of these have been quite sophisticated, built to move periodically and to omit sound. But the birds usually quickly discover the ruse, and return, actually perching on their mortal enemy model.

Others have resorted to real-life predators, using peregrin falcons, for example, to disburse pigeons. These real predators, however, are expensive, indiscriminate, unreliable and largely ineffective.

Others have attempted to use a noise deterrence, omitting a reoccurring sharp report to scare the birds away. This, too, is only minimally effective, as the birds become quickly accustomed to the noise. Further, this method is not useful around humans, as the sound is as noisome to them as to the birds.

Other devices and methods which have been employed to combat the bird problem include a gel which is applied to the perch area, giving the bird a chemical hot-foot when it lands in the goo. Light and ultrasound emitters designed to irritate the birds are also available. These all have drawbacks. The chemical gel is sticky, and therefore dust, dirt and small objects adhere to it, making it unsightly. Also it loses its effectiveness over time. The light and ultrasound emitters are expensive, need a power source, and are of only limited effectiveness in open areas.

The prior art device believed to be most commonly used comprises a continuous metal spine from which protude a repetitive pattern of points prongs. This device is affixed by screws or nails to those areas where the birds would unwantedly perch. Any bird with the temerity to attempt to land on this device painfully realizes his folly.

While this device has proven effective, it is subject to several drawbacks. First, it can be injurious to the birds. Second, it is potentially injurious to humans who unexpectedly come into contact with it. Third, it is relatively expensive. Fourth, it is somewhat unsightly and harsh in appearance. Fifth, papers and leaves can become impaled upon its tines, creating an eyesore.

Some people have even resulted to the ultimate sanction, actually killing large numbers of the offending birds in an attempt to frighten them off. This, of course, is highly disfavored as a deterrence means, but it is indicative of the levels of frustration experienced when an area goes literally "to the birds".

Bird infestation has indeed long been a problem. For example, Mr. Peles, (see U.S. Patent No. 2,304,593) addressed the problem of unwanted pidgeon perching in New York in 1940. His device is the most relevant prior art known to the inventor. The Peles device, however, used a too-heavy gauge wire and did not use appropriate wire diameters or wire spacing, such that it would not be effective, and would be too noticeable.

Accordingly, there has existed and continues to exist a need for an improved, effective way to deter birds from landing in certain areas.

## SUMMARY OF THE INVENTION

The method and apparatus of this invention provide such an effective alternative in an expanded-coil wire spiral which is affixed to those areas where deterrence to perching is desired. The wire must be of proper gauge, and the coils properly sized and spaced, such that the wire will not stably support the weight of the bird but does interferes with the wings of the bird as it attempts to land. This causes the bird benign discomfort such that it immediately takes flight. In some instances, the birds appear confused by the spiral shape and refuse to land.

The apparatus of this invention can also be made in a pre-assembled combination in which an expanded-coil wire spiral is affixed to an elongate strip which is in turn attachable to those areas where deterrence to perching is desired. The metal strip has a series of flaps punched along its length at the desired coil spacing. The flaps are bent and crimped over the wire so that it holds the wire in place, but allows the wire to rotate.

To connect the lengths of coiled wire together, a small spring, whose interior diameter is only slightly larger that the exterior diameter of the wire, is provided. The end loops of the spring are bent downwardly so that a compressive force is exerted on the wire when its end is inserted into the spring through the bent end-loops.

This method and apparatus have proven completely effective in deterring birds from landing at long-time favorite perches. For example, at the inventor's residence, an outdoor patio area had been rendered unusable by the residue left by the birds which constantly perched on the adjacent building structure. After installation of this invention, not a single drop of bird residue has been found. Moreover, because the invention consists essentially of a single strand of small gauge wire which is typically affixed to a location overhead, it is unnoticed by the casual observer. It also poses not threat of injury to the bird or to humans who might unwittingly come into contact with it, and is far less expensive than the prior art devices. It does not attract or collect dirt, dust, leaves, papers, etc., as do some of the prior art devices. It is also effective to deter cats and other small animals. Moreover, the high flexibility of the invention makes it ideal for use on statutes and other structures which are irregularly shaped.

Although this invention is simple, that simplicity is the hallmark of true invention, not obviousness.

## DESCRIPTION OF THE FIGURES

Figure 1 is a perspective view of the pre-assembled apparatus of this invention.

Figure 2 is a top plan view of the pre-assembled apparatus of Figure 1.

Figure 3 is a cross-sectional view taken along line 3-3 in Figure 2.

Figure 4 is a close-up, side view of the connector spring having bent end loops.

Figure 5 is a perspective view of the apparatus of the invention in which the wire coil is attached directly to the perch area.

## DESCRIPTION OF THE PREFERRED EMBODI-
### MENT

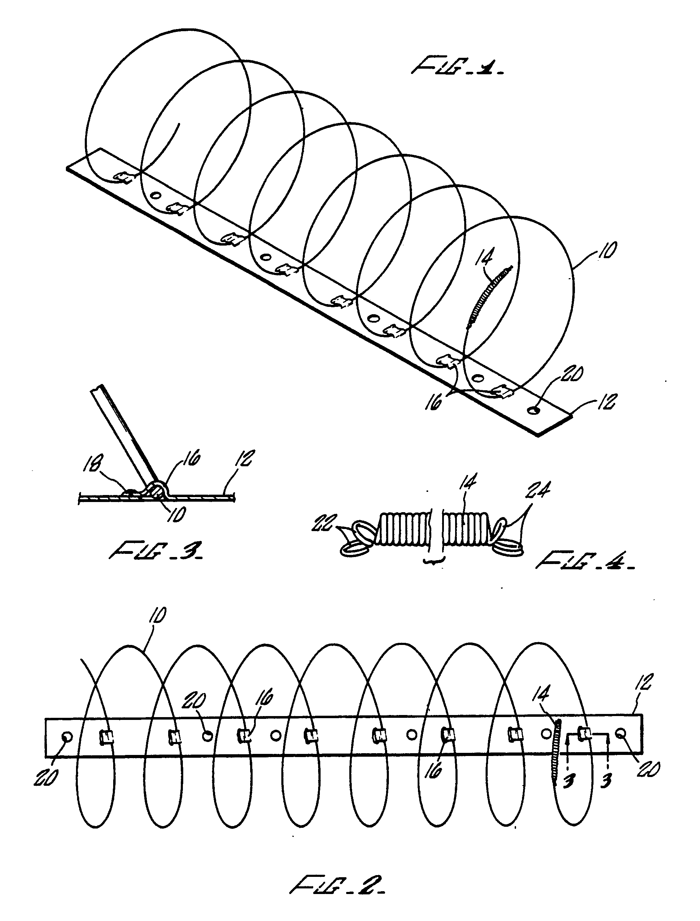

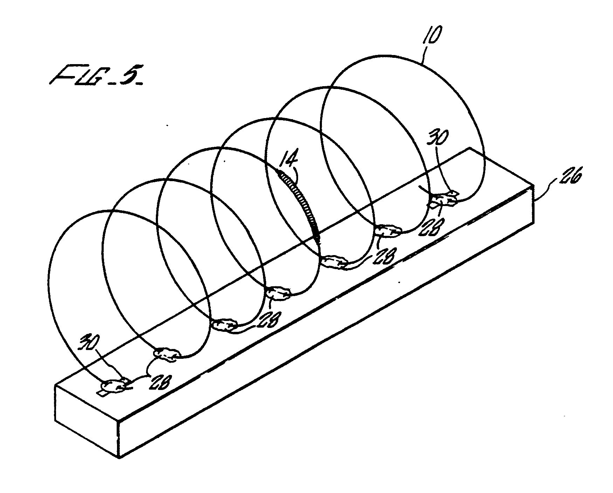

The pre-assembled device of this invention as shown in Figures 1-3 consists essentially of three parts -- the wire coil 10, the metal strip 12 and the connector spring 14.

The wire coil 10 is stainless steel wire extended to form a spiral shape. Wire having a thickness of .025 inches and a coil diameter of $3\frac{1}{2}$ inches has been found useful with the smaller bird species such a starlings, sparrows, blackbirds and the like. For this size bird, the coils are spread apart 2 to 2 1/2 inches.

For bigger birds, such as pigeons, seagulls and the like, a thicker wire (.045 to .050 inches), with a coil diameter of 3-3/4 to 4 inches, and a coil spacing of $3\frac{1}{2}$ to 4 inches (between adjacent loops of the spiral) has proven most effective, although the smaller gauge usually is effective with the bigger birds as well.

The strip 12 is also preferably made of stainless steel. Any other material of suitable properties could of course be substituted. At appropriate intervals depending upon the desired wire coil spacing, flaps 16 are punched from the strip 12. The flap 16 is bent and crimped over the wire 10 to hold it in position. If desired, a small amount of adhesive 18 can be applied to secure the flap 16. The strip 12 can also have holes 20 punched in it to provide a convenient means for attaching the strip 12 to the perch location.

It will be noted that the wire 10, while held securely in spaced coil arrangement by the flaps 16, is still rotatable therein. Therefore, for shipping, the wire coil 10 can be pushed down flat against the strip and inserted into a plastic sleeve. Once removed from the sleeve, the wire coil 10 returns to its upright position (as shown in Figs. 1 and 2) ready for installation on the perch location.

The strips 12 can be of any desired length. A 5-foot length has been found useful. The strip 12 and wire coil 10 can be cut quite easily if smaller lengths are necessary. The strips 12 can be attached end to end if a longer span is necessary. In that event, however, it is very important that the wire coil 10 extend continuously along the entire span. Otherwise, birds will perch in the small vacant area.

To connect the adjacent lengths of wire coil 10, a small metal spring 14 has been found effective. The interior diameter of the spring 14 should be slightly larger that the gauge of wire 10 for easy insertion. The end loops 22 and 24 of the spring 14 are bent downwardly approximately $90^{\circ}$. The wire 10 is inserted first through the end loops 22 or 24, then into the body of the spring 14. This causes increased pressure between the spring 14 and the wire coil 10, holding them together to form a continuous span along the entire perch location.

As shown in Figure 5, the wire coil 10 can be attached directly to the perch are 26 by attachment means 28. Several different attached means 28 for attaching the wire 10 to the perch area 26 are useful. For example, wood staples and tape can be used, but are not preferred. The preferred attachment means is a styrene-based adhesive. A suitable adhesive is available from Eclectic Products, Inc., and sold under the brand name Eclectic 6000. This material provides a very durable, paintable, highly abrasion resistant attachment means.

To attach the apparatus to the perch location, the appropriate size wire and coil size is selected. The wire is strung out along the perch location until the proper spacing of coils is achieved. The wire piece is then temporarily secured at either end. This can be accomplished with any suitable material, but a small piece of heavy tape 20 is effective. The preferred adhesive material is applied to each spot where the wire contacts the perch surface.

Although the invention hereinafter claimed has been shown and described above with particularity, it will be apparent to those skilled in the art that other modifications upon the embodiments shown and described may be made without departing from the invention concepts claimed herein. Accordingly, the scope and protection of this patent are not to be limited to the embodiments specifically shown and described above, but are of the full breath and scope of the appended claims.

**Claims**

1. An apparatus for deterring birds from landing on a perch location, the apparatus comprising a length of coiled wire; said wire being expanded such that a spiral shape of the wire is achieved; said wire in that shape attached at the ends and intermediate of the ends thereof to the perch location such that the axis of the spiral shape is parallel to the perch location surface; and said wire being of sufficiently light gauge so as not to stably support the weight of the bird to be deterred, but of sufficiently heavy gauge and the individual spirals being of proper size and spacing so as to interfere with the bird's ability to comfortably close its wings, causing it to take flight; said wire having a diameter of not less than .005 inches and not more than .1 inches, said spirals being not less than 3 inches in diameter, and said wire being expanded such that the adjacent spirals are not less than 2 inches apart.

2. The apparatus of claim 1 wherein said wire is stainless steel.

3. The apparatus of claim 1 wherein said wire is attached to the perch location by mechanical means.

4. The apparatus claim 1 wherein said wire is attached to the perch location by chemical means.

5. The apparatus of claim 5 wherein said chemical means comprises a styrene-based adhesive material.

6. An apparatus for deterring birds from landing on a perch location, the apparatus comprising a length of coiled wire; said wire being expanded such that a spiral shape of the wire is achieved; said wire being of sufficiently light gauge so as not to stably support the weight of the bird to be deterred, but of sufficiently heavy gauge and the individual spirals being of proper size and spacing so as to interfere with the bird's ability to comfortably close its wings, causing it to take flight, said wire having a diameter of not less than .005 inches and not more than .1 inches, said spirals being not less than 3 inches in diameter, and said wire being expanded such that the adjacent spirals are not less than 2 inches apart; said wire attached to an elongated strip having flaps punched therein at locations consistent with the desired coil spacing, said flaps being bent and crimped over the wire to hold it in position, said strip being attachable to the perch location.

7. The apparatus of claim 6 further comprising said strip have holes punched therein a convenient intervals through which screws, nails or the like can be inserted to attach the strip to the perch location.

8. In an apparatus for deterring birds from landing on a perch location, the apparatus comprising essentially adjacent lengths of coiled wire, the improvement comprising connector means for connecting the end of one wire coil to the next, said connector means comprising an elongate spring having loops in which one or more loops at each end are bent downwardly.

9. The improvement of claim 8 in which said loops on said spring are adjacent one another, except for the bent end loops.

10. The improvement of claim 9 in which the interior diameter of said spring is slightly larger than the diameter of the wire to be connected.

11. A method for deterring birds from landing on a perch location, the method comprising the steps of expanding a coiled length of wire apart such that it has a continuous spiral shape, and attaching said wire at the ends and at places intermediate of the ends thereof to the perch location, said wire having a gauge diameter of not less than .005 inches nor more than .1 inches such that the wire in the expanded state will not stably support the weight of the birds to be deterred, said spirals, when attached, having a diameter of not less than 3 inches, and adjacent spirals being spaced not less than 2 inches apart, such that the birds to be deterred cannot alight comfortably on or in-between the wire spirals.

12. The method of claim 11 wherein the wire is attached by chemical means.

13. The method of claim 11 wherein the wire is attached by chemical means.

14. The method of claim 11 wherein the wire is attached by a combination of chemical and mechanical means.

15. The method of claim 12 wherein said chemical means is a styrene-based adhesive material.

16. The method of claim 11 wherein each individual spiral is attached directly to the perch location.

FIG. 1.

FIG. 3.

FIG. 4.

FIG. 2.

FIG_5.

European Patent Office

EUROPEAN SEARCH REPORT

Application Number

EP 89 30 2173

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3605228 (M. ROOSMANN) <br> * column 3, line 35 - column 4, line 17; figures 2, 17 * <br> * column 6, lines 9 - 22 * | 1, 3, 11, 16 | A01M29/00 |
| A | | 6, 7 | |
| X, D | US-A-2304593 (J. S. PELES) <br> * pages 2 - 3; figures 1-4 * | 1, 3, 11, 16 | |
| A, D | | 6 | |
| A | GB-A-864298 (C. B. KAUFMANN) <br> * page 1, lines 60 - 74; figures 1, 2 * | 1, 2, 3, 6, 7, 11 | |
| A | DE-A-2055376 (R. HEUER) <br> * claims 3, 4, 5.6, 9 * | 1, 3, 4, 6, 12, 13, 14, 16 | |
| A | US-A-2258803 (J. S. PELES) | | |
| A | US-A-3148417 (R. S. BELLAS) | | TECHNICAL FIELDS SEARCHED (Int. Cl.5) |
| | | | A01M |

The present search report has been drawn up for all claims

| Place of search | Date of completion of the search | Examiner |
|---|---|---|
| THE HAGUE | 26 OCTOBER 1989 | WOHLRAPP R. G. |